# FASCICULE DE BREVET EUROPEEN

(11) **EP 2 442 980 B1**
(45) Date de publication et mention de la délivrance du brevet: **10.08.2016**
(21) Numéro de dépôt: 10734267.7
(22) Date de dépôt: 18.06.2010
(51) Int. Cl.: B32B 17/10, B29C 43/12, B62D 25/06, B60J 10/82

(54) **PROCEDE DE FABRICATION ET VITRAGE FEUILLETE DOTE D'AU MOINS UN TROU**
HERSTELLUNGSVERFAHREN UND VERBUNDVERGLASUNG MIT MINDESTENS EINEM DURCHBRUCH
MANUFACTURING PROCESS AND LAMINATED GLAZING ENDOWED WITH AT LEAST ONE HOLE

(30) Priorité: 19.06.2009 FR 0954167
(43) Date de publication de la demande: 25.04.2012
(73) Titulaire: Saint-Gobain Glass France, 92400 Courbevoie (FR)
(72) Inventeur: MARGUERITE, Cédric, F-60170 Saint Leger aux Bois (FR); LABROT, Michael, 52072 Aachen (DE)
(74) Mandataire: Lucas, Francois
(86) Numéro de dépôt international: PCT/FR2010/051221
(87) Numéro de publication internationale: WO 2010/146318

(56) Documents cités:
- EP-A2- 0 301 419
- WO-A1-2008/065310
- DE-A1- 10 230 443
- DE-C1- 4 311 442
- DE-C1- 19 849 840
- FR-A1- 2 569 625
- GB-A- 2 271 139

## Description

L'invention concerne un procédé de fabrication d'un vitrage feuilleté comportant au moins deux substrats en verre assemblés par une couche intermédiaire comprenant au moins une feuille de matière thermoplastique, notamment à base de polyvinylbutyral (PVB), ce vitrage étant doté d'au moins un trou.

Les vitrages feuilletés sont généralement utilisés pour fournir grâce à la couche intermédiaire thermoplastique, une ou des fonctionnalités combinées, telles que de sécurité, en particulier pour les pare-brises de véhicules en maintenant en place les morceaux de verre en cas de casse du vitrage, d'anti-effraction, d'effet anti-bruit (protection acoustique), ou encore d'effet filtrant en particulier vis-à-vis des rayons ultraviolets.

Il peut être utile pour certaines applications que les vitrages feuilletés soient pourvus en sortie de fabrication d'un ou de plusieurs trous traversants, c'est-à-dire d'au moins un trou agencé selon toute l'épaisseur du vitrage. La dimension du trou est généralement petite pour correspondre par exemple à un orifice de passage d'un élément de retenue ou de fixation, tel qu'une vis.

La réalisation de tels trous dans des vitrages feuilletés reste actuellement de petite taille, les procédés actuels de fabrication ne permettant pas de réaliser des orifices traversants dans un vitrage feuilleté présentant des dimensions significatives.

De manière commune, les procédés de fabrication de vitrage feuilletés consistent à superposer les feuilles de verre et l'intercalaire thermoplastique et à les assembler en autoclave. Toutefois, il est impératif avant le collage définitif de l'intercalaire aux feuilles de verre, de réaliser un dégazage, c'est-à-dire d'éliminer l'air emprisonné entre les feuilles de verre et l'intercalaire, et par ailleurs d'éviter toute pénétration d'air au cours de l'opération finale d'autoclavage.

Le dégazage est réalisé de différentes manières selon le type de procédé. Il est par exemple opéré dans un four de préchauffage par calandrage, procurant un pressage de la feuille de verre avec l'intercalaire la feuille. En variante, il est obtenu en disposant un joint périphérique sur la tranche du vitrage, ce joint étant connecté à une pompe à vide et possédant une gorge continue courant sur le pourtour du vitrage, en regard de l'intercalaire et débouchant au niveau de la pompe. L'air qui est emprisonné entre les feuilles de verre et l'intercalaire est alors aspiré grâce à la pompe à vide en s'échappant via la gorge du joint. Lors de cette opération d'aspiration, le vitrage est préchauffé dans un four.

Il est indispensable d'assurer une parfait dégazage car sinon, lors de l'autoclavage, la pression exercée sur le vitrage engendrerait un bullage (poches d'air localisées à l'interface du verre et de l'intercalaire), ou même la casse du vitrage.

L'opération de dégazage étant délicate, il n'a jamais été envisagé jusqu'à présent, d'élaborer un vitrage dont les feuilles de verre et l'intercalaire seraient percés au préalable et assemblés ensuite pour constituer un vitrage feuilleté pourvu d'un trou traversant de dimension conséquente.

Or on souhaite concevoir aujourd'hui des vitrages feuilleté percés dont la taille du trou soit suffisamment importante en rapport avec l'application concernée.

L'invention a donc pour but de proposer un procédé de fabrication permettant de manière simple et sans modification des étapes essentielles du procédé, de fournir un vitrage feuilleté doté d'au moins un trou traversant de dimension significative.

Selon l'invention, le procédé de fabrication d'un vitrage feuilleté comportant au moins deux substrats verriers et au moins une couche intercalaire en matière plastique agencée entre les substrats selon leurs plus grandes dimensions, et doté d'au moins un trou traversant l'épaisseur du vitrage, comporte une étape de superposition des substrats et de la couche intercalaire, les substrats et la couche ayant été préalablement découpés pour présenter des ouvertures respectives dont la superposition correspond audit trou du vitrage, et une étape de dégazage, et est caractérisé en ce qu'il comprend préalablement à l'étape de dégazage, une étape d'apposition d'un joint d'étanchéité amovible, autour de la périphérie dudit trou, au niveau de la tranche du vitrage et des faces générales externes des substrats verriers, le joint comprenant une âme et reliée à cette âme, deux ailes opposées s'étendant parallèlement dans la même direction, et espacées pour loger l'épaisseur du vitrage, les ailes présentant des faces respectives internes en regard qui sont chacune pourvue d'au moins un élément en saillie d'accrochage, et sont plaquées contre respectivement les faces générales externes des substrats, tandis que l'âme est dotée sur sa face interne reliant les faces internes des ailes, d'au moins une gorge agencée en vis-à-vis de la tranche du vitrage.

On entend par dégazage, une opération qui assure de chasser l'air entre les substrats et la couche intercalaire.

Le qualificatif « externe » s'entend dans la suite de la description comme respectivement, étant en regard de l'environnement extérieur à l'élément auquel il se rapporte.

Le qualificatif « interne » est relatif à une partie tournée vers l'intérieur de l'élément auquel il se rapporte.

Ainsi, un joint spécifique est disposé sur la périphérie du trou. Sa gorge est destinée à permettre l'évacuation de l'air lors de l'étape de dégazage. En outre les éléments en saillie d'accrochage agencés sur les faces internes des ailes permettent en étant plaqués contre les faces externes du vitrage de maintenir fermement le joint après le vitrage sans moyens complémentaires de solidarisation, en particulier avant de débuter l'étape de dégazage. En effet, il est surtout nécessaire de contenir le joint autour du trou du vitrage pour réaliser aisément et sans contrainte l'association du vitrage au dispositif de dégazage, car une fois l'aspiration initialisée, le joint restera en place.

Sans être rendu solidaire, le joint peut une fois le procédé de fabrication finalisé par une étape d'autoclavage, être facilement ôté.

Avantageusement, le ou les éléments en saillie d'accrochage d'une aile du joint présentent une inclinaison orientée en direction de l'âme, afin de s'opposer aux forces d'arrachage du joint lorsque celui-ci est positionné après le vitrage.

Si chaque aile du joint ne comporte qu'un unique élément d'accrochage, celui-ci est de préférence situé à proximité de l'extrémité distale de l'aile, à l'opposé de l'âme.

Selon une caractéristique, la distance séparant les ailes du joint est inférieure à l'épaisseur du vitrage, ce qui participe à la compression du joint contre les faces externes du vitrage.

Selon une autre caractéristique, le joint est réalisé par extrusion et est en un matériau flexible du type Éthylène Propylène Diène Monomère (EPDM). L'élasticité que procure le matériau permet ainsi de déployer l'espace de logement agencé entre les ailes du joint et rendre aisé le montage dudit joint après le vitrage, pour que celui-ci soit ensuite resserré et comprimé contre le vitrage.

Afin de fournir une surface d'adhésion suffisante du joint sur le vitrage, sans être non plus trop encombrante pour ne pas gêner la manipulation du vitrage, les ailes du joint recouvrent les faces externes des substrats selon une largeur dans une direction opposée au trou, d'au moins 8 mm, de préférence de 8 à 15 mm.

La gorge du joint est de préférence unitaire et s'étend sur toute la longueur du joint ; elle est connectée localement au niveau d'un ou de plusieurs emplacements à un dispositif d'aspiration de gaz, du type pompe à vide, pour assurer l'étape de dégazage.

En vue d'un dégazage complet, un joint d'étanchéité supplémentaire du type connu est disposé sur l'ensemble de la périphérie extérieure du vitrage, ce joint étant relié à un dispositif d'aspiration de gaz, du type pompe à vide, pouvant être celui-ci relié à l'autre joint.

Le procédé de l'invention procure un vitrage pour lequel la dimension du trou sera adaptée à l'utilisation particulière du vitrage.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique de dessus d'un vitrage feuilleté associé au dispositif de mise en oeuvre d'une partie du procédé de l'invention;
- La figure 2 est une vue en coupe partielle de la figure 1 selon l'épaisseur du vitrage et illustrant un joint spécifique participant à la mise en oeuvre du procédé de l'invention;
- La figure 3 est une vue en perspective d'une variante de réalisation du joint particulier de l'invention ;
- La figure 4 est une vue en coupe d'une autre variante de réalisation du joint.

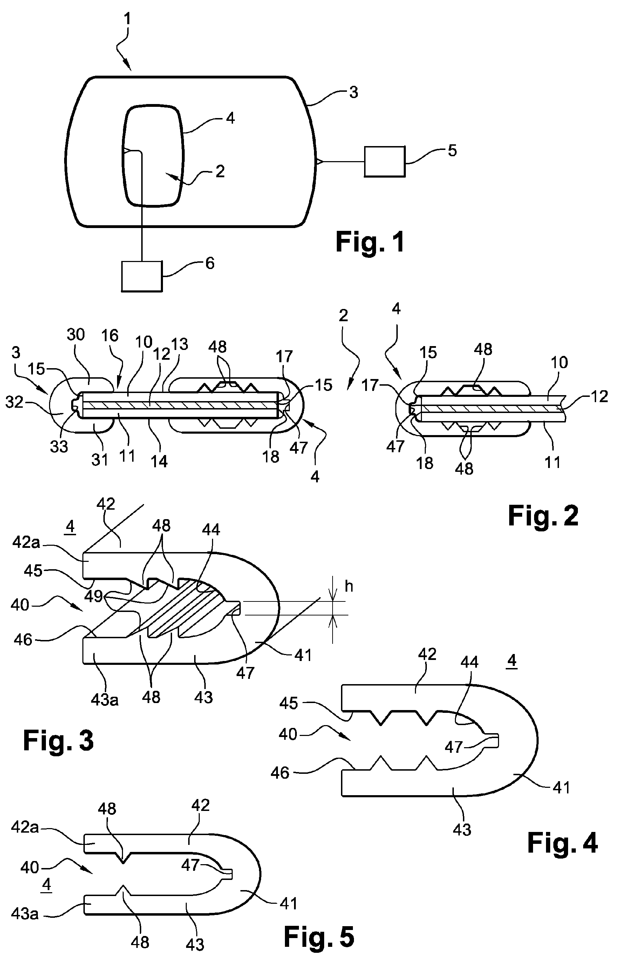

La figure 1 illustre un vitrage feuilleté 1 qui est associé à un dispositif assurant la mise en oeuvre de l'une des étapes du procédé de fabrication de l'invention, le dégazage.

Le vitrage feuilleté 1 est par exemple destiné à constituer le toit ouvrant d'un véhicule automobile. Il comporte un trou 2 destiné à former l'ouverture du toit et à être fermé dans cette application particulière par des moyens d'obturation mobiles appropriés non illustrés.

Le trou présente des dimensions significatives, notamment supérieures à 100 cm², telles que dans l'application présente, en particulier de l'ordre de 0,4 m².

Le vitrage feuilleté dont une vue en coupe partielle est illustrée sur la figure 2 comprend au moins deux feuilles ou substrats verriers 10 et 11, et un intercalaire ou feuille intermédiaire 12 agencée entre lesdites feuilles de verre.

Le procédé de fabrication du vitrage comprend différentes étapes qui vont être successivement décrites.

Une étape préliminaire consiste à disposer de deux feuilles de verre 10 et 11 qui ont été préalablement découpées par une méthode usuelle de découpe du verre, en laissant place à des ouvertures aux dimensions du trou 2, et d'un intercalaire 12 également préalablement découpé par tous moyens usuels de découpe de feuille en matière plastique, en fournissant une ouverture correspondant audit trou 2.

Les feuilles de verre 10 et 11 découpées et l'intercalaire 12 découpé sont superposés pour former un ensemble feuilleté aux faces externes 13 et 14 et de tranche 15. L'étape d'association des feuilles de verre et de l'intercalaire est en soi connue et n'est pas ici détaillée.

Un joint périphérique 3 est disposé de manière amovible sur l'ensemble du pourtour extérieur 16 du vitrage. Ce joint, habituel dans la fabrication d'un vitrage feuilleté plein, est de forme générale en U, les ailes 30 et 31 du U et de surface sensiblement lisse étant plaquées contre les faces externes respectives 13 et 14 des feuilles de verre, l'âme ou le fond 32 du U étant agencé contre la tranche 15 du vitrage.

Le joint 3 en matière souple, par exemple en EPDM, est retenu sur le vitrage par simple pression élastique. Etant sur le pourtour extérieur du vitrage, il n'a pas besoin de moyens de retenue spécifiques.

Le joint 3 est pourvu de manière connue d'une gorge périphérique 33 établie dans le fond du U et mis en regard de la tranche 15 du vitrage. Cette gorge est reliée à au moins un emplacement du vitrage à un dispositif d'aspiration de gaz 5 tel qu'illustré schématiquement sur la figure 1.

Selon l'invention, le procédé de fabrication comporte la mise en place d'un autre joint 4 amovible sur la périphérie du trou 2. La figure 2 illustre ce joint mis en place après le vitrage. Les figures 3 à 5 sont des variantes de réalisation de ce joint.

Le joint 4 présente une forme générale en U. Il comporte une ouverture 40 délimitée par une âme 41 et des ailes espacées et en regard 42 et 43, présentant des faces internes respectives 44 pour l'âme, et 45 et 46 pour les ailes. Le joint est enchâssé via son ouverture 40 sur la tranche 15 du vitrage dessinant le trou 2 (figure 2).

Il est fabriqué dans un matériau souple élastique du type EPDM, de préférence par extrusion.

La face interne 44 de l'âme du U comporte une gorge 47 qui s'étend sur toute la longueur du joint. La gorge est de préférence centrée dans le fond du U de manière à être disposée en regard de la tranche de l'intercalaire 12 du vitrage (figure 2). Elle présente une hauteur h de préférence supérieure à l'épaisseur de l'intercalaire 12 pour être agencée en face des interfaces 17 et 18 des feuilles de verre et de l'intercalaire.

Les faces internes 45 et 46 des ailes présentent chacune au moins un élément en saillie 48 servant de moyens d'accrochage et de retenue du joint contre les faces externes 10 et 11 du vitrage.

Le joint 4 joue un rôle de mâchoire qui peut être suffisamment ouverte grâce à sa flexibilité et être alors enchâssée après la tranche 15 du vitrage délimitant le trou 2, et qui une fois refermée contre les faces externes 10 et 11 du vitrage, reste maintenue fermement grâce à ses éléments en saillie 48.

L'élément en saillie 48 s'étend de préférence sur toute la longueur du joint lorsque celui-ci est obtenu par extrusion.

L'élément 48 en regard de la variante de la figure 3 présente préférentiellement une inclinaison 49 débutant de la face interne de l'aile et dirigée vers la gorge 47, c'est-à-dire dans une direction opposée à l'ouverture 40 du joint. Ainsi, en position montée du joint après le trou 2, l'élément s'oppose par son inclinaison 49 à l'arrachage du joint.

Dans les exemples représentés sur les figures 2 à 4, le joint 4 comporte sur chacune de ses ailes deux éléments d'accrochage en saillie 48 qui sont centrés sur la distance de séparation de l'âme 41 à l'extrémité distale libre 42a ou 43a de chacune des ailes. Chaque aile pourrait ne comporter qu'un seul élément en saillie, tel qu'illustré sur la figure 5, qui serait alors de préférence agencé à proximité de l'extrémité distale libre 42a ou 43a de l'aile. Dans une autre variante encore, plus de deux éléments de retenus pourraient être prévus.

En position montée du joint, la gorge 47 est connectée au niveau d'au moins un emplacement du pourtour du trou 2, à un dispositif d'aspiration de gaz 6 tel qu'illustré schématiquement sur la figure 1.

On peut prévoir plusieurs emplacements d'aspiration sur le périmètre du joint 4 en fonction de la dimension du trou.

Les dispositifs d'aspiration 5 et 6 qui pourraient être rassemblés en un seul dispositif, sont mis en fonctionnement pour assurer le vide d'air entre les feuilles de verre et l'intercalaire.

Une fois le dégazage effectué, l'ensemble du vitrage est passé de manière connue en autoclave pour assurer l'assemblage des feuilles de verre avec l'intercalaire. Il peut être envisagé lors du dégazage d'effectuer simultanément un début de chauffage de l'ensemble du vitrage.

Après assemblage, les joints 3 et 4 sont retirés.

Par conséquent, le procédé de l'invention procurant un trou dans les feuilles de verre et intercalaire du vitrage, et utilisant un joint au niveau du trou du vitrage permet grâce également aux particularités de ce joint spécifique, de fournir de manière simple et sans surcoût significatif par rapport au procédé de fabrication d'un vitrage plein, un vitrage feuilleté avec un trou de dimensions conséquentes en vue d'applications totalement nouvelles telles qu'un toit de véhicule ouvrant en verre, en particulier d'automobile.

## Revendications

1. Procédé de fabrication d'un vitrage feuilleté (1) comportant au moins deux substrats verriers (10, 11) et au moins une couche intercalaire (12) en matière plastique agencée entre les substrats selon leurs plus grandes dimensions, et doté d'au moins un trou (2) traversant l'épaisseur du vitrage, le procédé comportant une étape de superposition des substrats et de la couche intercalaire, les substrats et la couche ayant été préalablement découpés pour présenter des ouvertures respectives dont la superposition correspond audit trou (2) du vitrage, et une étape de dégazage, **caractérisé en ce qu'**il comprend préalablement à l'étape de dégazage, une étape d'apposition d'un joint d'étanchéité amovible (4) autour de la périphérie dudit trou (2) au niveau de la tranche (18) du vitrage et des faces générales externes (13, 14) des substrats verriers, le joint comprenant une âme (41) et reliées à cette âme, deux ailes opposées (42, 43) s'étendant parallèlement dans la même direction et espacées pour loger l'épaisseur du vitrage, les ailes présentant des faces respectives internes en regard (45, 46) qui sont, chacune pourvue d'au moins un élément en saillie d'accrochage (48), et plaquées contre respectivement les faces générales externes (13, 14) des substrats, tandis que l'âme (41) est dotée sur sa face interne (44) reliant les faces internes des ailes, d'au moins une gorge (47) agencée en vis-à-vis de la tranche (18) du vitrage.

2. Procédé selon la revendication 1, **caractérisé en ce que** le ou les éléments en saillie d'accrochage (48) d'une aile du joint présentent une inclinaison (49) orientée en direction de l'âme (41).

3. Procédé selon la revendication 1 ou 2, **caractérisé en ce que** chaque aile du joint comporte un unique élément d'accrochage (48) qui est situé à proximité de l'extrémité distale (42a, 43a) de l'aile, à l'opposé de l'âme (41).

4. Procédé selon l'une quelconque des revendications précédentes, **caractérisé en ce que** la distance séparant les ailes (42, 43) du joint (4) est inférieure à l'épaisseur du vitrage.

5. Procédé selon l'une quelconque des revendications précédentes, **caractérisé en ce que** le joint (4) est réalisé par extrusion et est en un matériau flexible du type Éthylène Propylène Diène Monomère (EPDM).

6. Procédé selon l'une quelconque des revendications précédentes, **caractérisé en ce que** les ailes (42, 43) du joint (4) recouvrent les faces externes (13, 14) des substrats selon une largeur dans une direction opposée au trou, d'au moins 8 mm, de préférence de 8 à 15 mm.

7. Procédé selon l'une quelconque des revendications précédentes, **caractérisé en ce que** la gorge (47) du joint (4) est connectée localement à un dispositif d'aspiration de gaz (6), du type pompe à vide pour assurer l'étape de dégazage.

8. Procédé selon l'une quelconque des revendications précédentes, **caractérisé en ce qu'**un joint d'étanchéité (3) supplémentaire du type connu est disposé sur l'ensemble de la périphérie extérieure du vitrage, ce joint étant relié à un dispositif d'aspiration de gaz (5, 6), du type pompe à vide.

## Patentansprüche

1. Verfahren zur Herstellung einer Verbundverglasung (1), die wenigstens zwei Glassubstrate (10, 11) und wenigstens eine Zwischenschicht (12) aus Kunststoff, welche zwischen den Substraten entlang ihren größten Abmessungen angeordnet ist, umfasst und mit wenigstens einem Loch (2), welches die Dicke der Verglasung durchquert, ausgestattet ist, wobei das Verfahren einen Schritt des Übereinanderlegens der Substrate und der Zwischenschicht, wobei die Substrate und die Schicht zuvor ausgeschnitten worden sind, um jeweilige Öffnungen aufzuweisen, deren Übereinanderlagerung dem Loch (2) der Verglasung entspricht, sowie einen Entgasungsschritt umfasst, **dadurch gekennzeichnet, dass** es vor dem Entgasungsschritt einen Schritt zum Anbringen einer lösbaren Dichtung (4) um den Umfang des Loches (2) im Bereich der Kante (18) der Verglasung und der äußeren Hauptseiten (13, 14) der Glassubstrate umfasst, wobei die Dichtung einen Steg (41) sowie, mit diesem Steg verbunden, zwei gegenüberliegende Schenkel (42, 43) umfasst, die sich in der gleichen Richtung parallel erstrecken und voneinander beabstandet sind, um die Dicke der Verglasung aufzunehmen, wobei die Schenkel jeweilige gegenüberliegende Innenseiten (45, 46) aufweisen, die jeweils mit wenigstens einem vorspringenden Einhakelement (48) versehen und jeweils gegen die äußeren Hauptseiten (13, 14) der Substrate gedrückt sind, während der Steg (41) auf seiner Innenseite (44), welche die Innenseiten der Schenkel verbindet, mit wenigstens einer Nut (47), welche gegenüber der Kante (18) der Verglasung angeordnet ist, versehen ist.

2. Verfahren nach Anspruch 1, **dadurch gekennzeichnet, dass** das oder die vorspringenden Einhakelemente (48) eines Schenkels der Dichtung eine in Richtung des Stegs (41) gerichtete Neigung (49) aufweisen.

3. Verfahren nach Anspruch 1 oder 2, **dadurch gekennzeichnet, dass** jeder Schenkel der Dichtung ein einziges Einhakelement (48) umfasst, das in der Nähe des distalen Endes (42a, 43a) des Schenkels, vom Steg (41) abgewandt, gelegen ist.

4. Verfahren nach einem der vorhergehenden Ansprüche, **dadurch gekennzeichnet, dass** der Abstand zwischen den Schenkeln (42, 43) der Dichtung (4) kleiner als die Dicke der Verglasung ist.

5. Verfahren nach einem der vorhergehenden Ansprüche, **dadurch gekennzeichnet, dass** die Dichtung (4) durch Extrusion hergestellt ist und aus einem flexiblen Material vom Typ Ethylen-Propylen-Dien-Monomer (EPDM) besteht.

6. Verfahren nach einem der vorhergehenden Ansprüche, **dadurch gekennzeichnet, dass** die Schenkel (42, 43) der Dichtung (4) die Außenseiten (13, 14) der Substrate entlang einer Breite, in einer zu dem Loch entgegengesetzten Richtung, von wenigstens 8 mm, vorzugsweise von 8 bis 15 mm bedecken.

7. Verfahren nach einem der vorhergehenden Ansprüche, **dadurch gekennzeichnet, dass** die Nut (47) der Dichtung (4) lokal mit einer Gasabsaugvorrichtung (6) vom Typ Vakuumpumpe verbunden ist, um den Schritt des Entgasens sicherzustellen.

8. Verfahren nach einem der vorhergehenden Ansprüche, **dadurch gekennzeichnet, dass** eine zusätzliche Dichtung (3) bekannten Typs über den gesamten Außenumfang der Verglasung angeordnet ist, wobei diese Dichtung mit einer Gasabsaugvorrichtung (5, 6) vom Typ Vakuumpumpe verbunden ist.

## Claims

1. A process for manufacturing a laminated glazing unit (1) comprising at least two glass substrates (10, 11) and at least one plastic interlayer (12) arranged over the largest dimensions of the substrates, and provided with at least one hole (2) through the thickness of the glazing, the process comprising a step of superposing the substrates and the interlayer, the substrates and the interlayer having been cut beforehand so as to have respective apertures of which the superposition corresponds to said hole (2) in the glazing unit, and a degassing step, **characterized in that** it comprises, before the degassing step, a step of affixing a removable seal (4), around the periphery of said hole (2), to the edge face (18) of the glazing unit and to the general external faces (13, 14) of the glass substrates, the seal comprising a web (41) and, connected to this web, two opposed flanges (42, 43) extending in parallel in the same direction and spaced so as to house the thickness of the glazing, the flanges having respective mutually facing internal faces (45, 46), which are each provided with at least one protruding fastening element (48) and respectively pressed against the general external faces (13, 14) of the substrates, whereas the web (41) is provided, on its internal face (44) connecting the internal faces of the flanges, with at least one groove (47) arranged opposite the edge face (18) of the glazing unit.

2. The process as claimed in claim 1, **characterized in that** the one or more protruding fastening elements (48) of a flange of the seal are inclined (49) toward the web (41).

3. The process as claimed in either one of claims 1 and 2, **characterized in that** each flange of the seal comprises a single fastening element (48) which is located near the distal end (42a, 43a) of the flange, at the opposite end to the web (41).

4. The process as claimed in any one of the preceding claims, **characterized in that** the distance separating the flanges (42, 43) of the seal (4) is smaller than the thickness of the glazing.

5. The process as claimed in any one of the preceding claims, **characterized in that** the seal (4) is extruded and made of a flexible material of the ethylene-propylene-diene monomer (EPDM) type.

6. The process as claimed in any one of the preceding claims, **characterized in that** the flanges (42, 43) of the seal (4) cover the external faces (13, 14) of the substrates over a width, in a direction away from the hole, of at least 8 mm, preferably from 8 to 15 mm.

7. The process as claimed in any one of the preceding claims, **characterized in that** the groove (47) of the seal (4) is locally connected to a gas extraction device (6), of the vacuum pump type, so as to ensure the degassing step.

8. The process as claimed in any one of the preceding claims, **characterized in that** an additional seal (3) of the known type is placed around the entire external periphery of the glazing unit, this seal being connected to a gas extraction device (5, 6), of the vacuum pump type.
